# EUROPEAN PATENT APPLICATION

(11) **EP 4 432 462 A1**
(43) Date of publication of application: **18.09.2024**
(21) Application number: 24160590.6
(22) Date of filing: 29.02.2024
(51) Int. Cl.: H01Q 1/22, H01Q 1/32, E02F 9/08, E02F 9/16

(54) **CONSTRUCTION MACHINE**

(30) Priority: 15.03.2023 JP 2023040884
(71) Applicant: Yanmar Holdings Co., Ltd., Osaka-shi, Osaka (JP)
(72) Inventor: MIKI, Takahiro, Chikugo-shi (JP)
(74) Representative: Dennemeyer & Associates S.A.

(57) **Abstract**

[Problem] To provide a construction machine in which an antenna can be placed at a position apart from a driver's seat while the limited space of a driving unit is effectively utilized.

[Solution] A construction machine including a wireless communication antenna 52 that is provided in a driving unit 10 having a driving base 50 as a base part, the construction machine including a driver's seat 17 that is provided on the driving base 50, and a right side work operation lever 22 that is placed on one of left and right sides of the driver's seat 17, wherein the antenna 52 is placed at a position that is located in front of the right side work operation lever 22 in a front-rear direction and that is located on an outer side of the right side work operation lever 22 and on an inner side of an edge of the driving base 50 in a left-right direction.

## Description

### TECHNICAL FIELD

The present invention relates to a construction machine including an antenna for wirelessly communicating with an external device.

### BACKGROUND ART

In recent years, some construction machines such as excavation work machines include an antenna for wirelessly communicating with an external device such as a satellite or a base station. Conventional construction machines include a construction machine in which an antenna is placed in a driving cab provided in an upper turning body turnable with respect to a lower traveling body (see, for example, Patent Document 1).

Patent Document 1 discloses a mini excavator as a type of construction machine in which a GPS (global positioning system) antenna enabling communication with an external communication unit is placed inside a backrest portion of a driver's seat in a driving cab or inside a seating portion of the driver's seat.

### PRIOR ART DOCUMENT

### PATENT DOCUMENT

Patent Document 1: Japanese Patent No. 5191932

### SUMMARY OF INVENTION

### TECHNICAL PROBLEM

An antenna such as a GPS antenna is a device that transmits and receives a relatively strong radio wave. Thus, for example, as in the configuration disclosed in Patent Document 1, in a configuration in which an antenna is placed at a position close to a human body, such as a driver's seat, a radio wave transmitted and received by the antenna may have an influence on the human body.

The present invention has been made in view of the above problem, and an object of the present invention is to provide a construction machine in which an antenna can be placed at a position apart from a driver's seat while the limited space of a driving unit is effectively utilized.

### SOLUTION TO PROBLEM

A construction machine according to the present invention including a wireless communication antenna that is provided in a driving unit having a driving base as a base part, the construction machine including: a driver's seat that is provided on the driving base; and an operation lever that is placed on one of left and right sides of the driver's seat, wherein the antenna is placed at a position that is located in front of the operation lever in a front-rear direction and that is located on an outer side of the operation lever and on an inner side of an edge of the driving base in a left-right direction.

In the construction machine according to another aspect of the present invention, the antenna is placed below a monitor placed in front of the operation lever.

The construction machine according to another aspect of the present invention including an air conditioning duct having a front-rear extending portion that extends forward of the driver's seat along an edge portion of the driving base on the one of the left and right sides in plan view and a raised portion that is raised from the front-rear extending portion, wherein the antenna is placed at a position that is located on an outer side of the raised portion in the left-right direction and that is located below an upper end of the raised portion in an up-down direction.

In the construction machine according to another aspect of the present invention, the monitor is placed in an upper portion of the raised portion of the air conditioning duct, and the antenna is placed so that at least part of the antenna overlaps with the monitor in plan view.

In the construction machine according to another aspect of the present invention, the air conditioning duct has a recess portion that is recessed toward a lateral inner side in a portion of the raised portion that includes a position at which the antenna is placed in the up-down direction.

The construction machine according to another aspect of the present invention including a duct support frame that supports the air conditioning duct with respect to the driving base, wherein the antenna is supported by the duct support frame.

The construction machine according to another aspect of the present invention including an electrical component that is provided at a position below the antenna in the up-down direction and is supported by the air conditioning duct.

In the construction machine according to another aspect of the present invention, the air conditioning duct has, as a portion that supports the electrical component, an inclined portion that is inclined upward toward a front in side view.

### ADVANTAGEOUS EFFECTS OF INVENTION

The present invention enables an antenna to be placed at a position apart from a driver's seat, while effectively utilizing the limited space of a driving unit.

### BRIEF DESCRIPTION OF DRAWINGS

FIG. 1 is a left side view of an excavation work machine according to one embodiment of the present invention.
FIG. 2 is a plan view of the excavation work machine according to one embodiment of the present invention.
FIG. 3 is a left front perspective view of a driving unit according to one embodiment of the present invention.
FIG. 4 is a plan view of the driving unit according to one embodiment of the present invention.
FIG. 5 is a right rear perspective view of the driving unit according to one embodiment of the present invention.
FIG. 6 is a right side view of an air conditioning duct and the surrounding configuration according to one embodiment of the present invention.
FIG. 7 is a partial cross-sectional plan view of the air conditioning duct and the surrounding configuration according to one embodiment of the present invention.
FIG. 8 is a right rear perspective view of a support configuration for an antenna according to one embodiment of the present invention.
FIG. 9 is a partially cut-out cross-sectional plan view of the air conditioning duct and the surrounding configuration according to one embodiment of the present invention.
FIG. 10 is a right rear perspective view of a support configuration for relay boxes according to one embodiment of the present invention.

### DESCRIPTION OF EMBODIMENTS

In the present invention, in a configuration in which a wireless communication antenna is provided on a driving base constituting a base portion of a driving unit, the antenna is successfully placed to ensure a sufficient distance between the antenna and a driver's seat and allow the antenna to have good maintainability. An embodiment of the present invention will be described below with reference to the drawings.

In an embodiment of the present invention, an excavation work machine (excavator) that is a turning work vehicle will be described as an example of a construction machine according to the present invention. However, the construction machine according to the present invention is not limited to the excavation work machine, and is widely applicable to other types of construction machines such as a bulldozer, a crane work machine, a compact truck loader, a skid-steer loader, and a wheel loader.

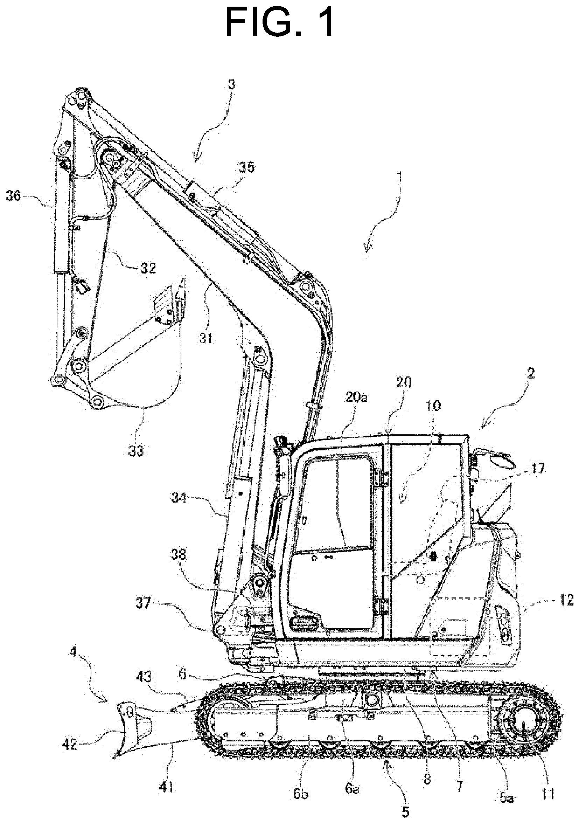

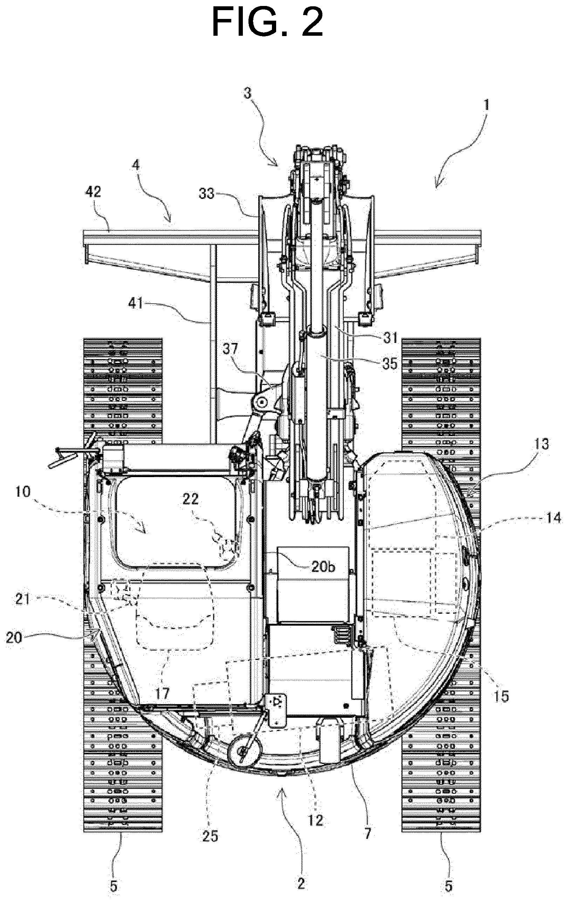

An overall configuration of an excavation work machine 1 according to the present embodiment will be described with reference to FIGS. 1 to 3. As shown in FIGS. 1 and 2, the excavation work machine 1 includes a traveling device 2 as a traveling vehicle body capable of self-traveling, and an excavation device 3 and a soil removal device 4 as work units attached to the traveling device 2.

The traveling device 2 is a portion constituting a main unit of the excavation work machine 1, and includes a pair of left and right crawler-type traveling units 5, a machine body frame 6 as a base interposed between the left and right traveling units 5, and a turning frame 7 that is provided on the machine body frame 6.

The traveling units 5 have a configuration in which a crawler is wound around a plurality of rotating bodies such as sprockets and rollers supported by the machine body frame 6. The traveling units 5 have a drive sprocket 5a as a drive wheel in a rear end portion of the traveling units 5. The machine body frame 6 has a center frame portion 6a that is located in a center portion between the left and right traveling units 5, and side frame portions 6b that are provided on both the left and right sides of the center frame portion 6a.

Each of the traveling units 5 is provided with a traveling hydraulic motor 11. In each of the traveling units 5, the traveling hydraulic motor 11 is attached to a predetermined portion such as the side frame portion 6b of the machine body frame 6, and causes the drive sprocket 5a to be rotationally driven. The left and right traveling hydraulic motors 11 drive the respective traveling units 5 to allow the traveling device 2 to travel straight forward or backward or to turn left or right.

The turning frame 7 is connected to the machine body frame 6 via a turning support portion 8 including a turning bearing provided above the center frame portion 6a, and is provided to be turnable in both the left and right directions around the vertical axis with respect to the machine body frame 6. The turning frame 7 is turned by driving of a turning motor (not shown) that is a hydraulic motor for turning.

A driving unit 10 is provided on the turning frame 7. A prime mover portion including an engine 12 as a drive source and the like is provided in a rear portion on the turning frame 7. A tank housing portion 13 that houses a fuel tank 14 and a hydraulic oil tank 15 is provided on the right side of the driving unit 10 (see FIG. 2).

The driving unit 10 is used to drive and operate the traveling device 2, the excavation device 3, and the soil removal device 4, and is provided in a cabin 20 that is provided on the turning frame 7. The cabin 20 has a frame that forms an outer shape of the cabin 20, and a plurality of window portions composed of a transparent member such as glass, and has a substantially box shape as a whole. A left side surface portion of the cabin 20 is provided with an open/close door 20a for opening and closing an entrance and exit to the driving unit 10 for an operator.

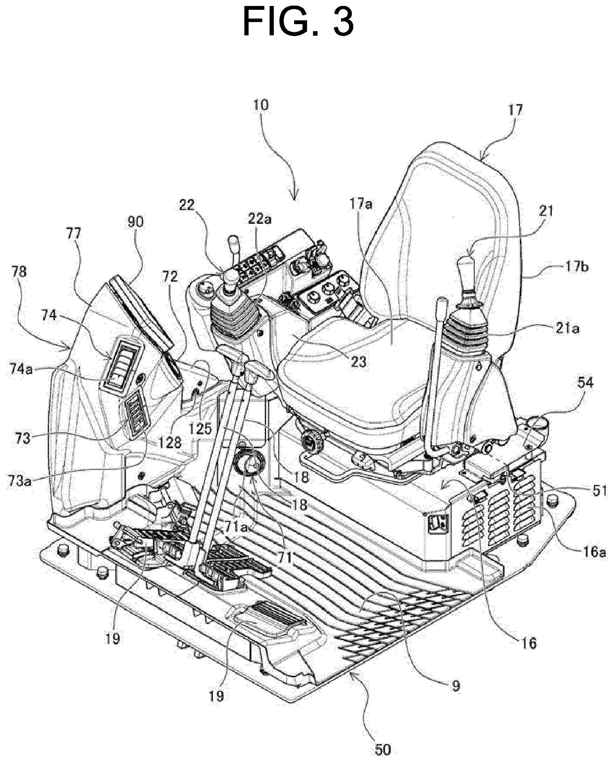

As shown in FIG. 3, in the cabin 20, a driver's seat support base 16 is provided on a floor portion 9, and a driver's seat 17 is provided on the driver's seat support base 16. The driver's seat support base 16 is a hollow box-shaped portion, and has a front surface portion and a left side surface portion that are perpendicular to the floor portion 9 and a horizontal upper surface portion that constitutes a contact surface portion of the driver's seat 17.

The driver's seat 17 has a seat surface portion 17a and a backrest portion 17b. A pair of left and right traveling levers 18 that extend upward from the floor portion 9 are provided in front of the driver's seat 17. A plurality of operation pedals 19 for work are provided on both the left and right sides of the left and right traveling levers 18 on the floor portion 9. Around the driver's seat 17, work operation units such as work operation levers for operating the work units such as the excavation device 3 and the soil removal device 4, an operation panel portion having various operating units such as a switch, and the like are provided.

As work operation units, a left side work operation lever 21 is provided on the left side of the driver's seat 17, and a right side work operation lever 22 is provided on the right side of the driver's seat 17. The operation lever 21 on the left side and the operation lever 22 on the right side are used to operate the excavation device 3. A base side portion of the left side work operation lever 21 is covered with a bellows-shaped lever boot 21a, and a bar-shaped grip portion is exposed upward from the lever boot 21a. Furthermore, a base side portion of the right side work operation lever 22 is covered with a bellows-shaped lever boot 22a, and a bar-shaped grip portion is exposed upward from the lever boot 22a. The operation levers 21 and 22 are operable to be tilted at least forward, backward, leftward, and rightward.

The right side work operation lever 22 is provided on a console unit 23 that is adjacently placed on the right side of the driver's seat 17. The console unit 23 extends in the front-rear direction so that the longitudinal direction of the console unit 23 corresponds to the front-rear direction in plan view. The right side work operation lever 22 is provided on a front end portion of the console unit 23. The right side work operation lever 22 is located diagonally right in front of a right front corner of the seat surface portion 17a of the driver's seat 17 having a substantially rectangular shape in plan view. An operating unit such as a dial is provided on the upper surface side of a rear portion of the console unit 23.

A base end portion of the excavation device 3 is attached to a lateral center portion at a front end of the turning frame 7. The excavation device 3 includes a boom 31 that constitutes the base end portion of the excavation device 3, an arm 32 that is connected to a tip end of the boom 31, and a bucket 33 that is attached to a tip end portion of the arm 32. Furthermore, the excavation device 3 includes a boom cylinder 34 that causes the boom 31 to be rotationally moved, an arm cylinder 35 that causes the arm 32 to be rotationally moved, and a bucket cylinder 36 that causes the bucket 33 to be rotationally moved.

A base end portion of the boom 31 is supported by a boom support bracket 37. The boom support bracket 37 is supported by a bracket attachment portion 38 that is protrusively provided in the lateral center portion at the front end of the turning frame 7. The boom cylinder 34, the arm cylinder 35, and the bucket cylinder 36 constituting the excavation device 3 are each a hydraulic cylinder driven by pressure oil discharged from a hydraulic pump 25 (see FIG. 2).

The soil removal device 4 is attached to the front side of the machine body frame 6. The soil removal device 4 includes a support frame 41 that includes a pair of left and right arms extending in the front-rear direction between the left and right traveling units 5, a blade 42 that is a soil removal plate provided on the tip end side of the support frame 41, and a blade cylinder 43 that raises and lowers the blade 42 via the support frame 41. The blade cylinder 43 is a hydraulic cylinder driven by pressure oil discharged from the hydraulic pump 25.

The support frame 41 is attached to the machine body frame 6 to be rotatably raised and lowered with respect to the machine body frame 6. Rear end portions of the left and right arms of the support frame 41 are supported by a support bracket at a front portion of the machine body frame 6 so that the left and right arms are rotatable in a rotation axis direction corresponding to the left-right direction. The blade 42 is supported by a front end portion of the support frame 41. The blade cylinder 43 is bridged in the front-rear direction between the machine body frame 6 and the back side of the blade 42.

The excavation work machine 1 includes a lower traveling body that includes the machine body frame 6 and the traveling units 5 supported on both the left and right sides of the machine body frame 6, and an upper turning body that is turnable with respect to the lower traveling body. The upper turning body includes the turning frame 7, and the driving unit 10, the engine 12, and the tank housing portion 13 that are provided on the turning frame 7, and the like.

In the excavation work machine 1 having the configuration described above, an operator sitting in the driver's seat 17 appropriately operates the traveling levers 18, the operation levers 21 and 22, or the like, to perform a desired action or work. Specifically, for example, the left and right traveling levers 18 are operated to allow the traveling device 2 to travel straight forward or backward or to turn left or right through operation of the left and right traveling units 5. Furthermore, the operation levers 21 and 22 are operated to allow the excavation device 3 to perform excavation work or allow the soil removal device 4 to perform soil removal work or ground leveling work.

The excavation work machine 1 includes a communication device for wirelessly communicating with an external device such as a satellite or a base station. The communication device transmits and receives information for capturing the position of the excavation work machine 1 or determining the operating status, action state, or the like of the excavation work machine 1. That is, the communication device has, for example, a function of receiving a radio wave from a GPS satellite to capture the position of the excavation work machine 1, a function of mutually transmitting various types of information on the excavation work machine 1 (e.g., the rotation speed of the engine 12, etc.) with an external base station through mobile communication using a communications satellite or the like.

The communication device includes a communication device main body portion 51 that constitutes a control unit, an antenna 52, and an antenna cable 53 that electrically connects the antenna 52 to the communication device main body portion 51. The antenna 52 is, for example, a GNSS receiver (GNSS antenna) that receives a radio wave from a GNSS satellite group, or a GPS receiver (GPS antenna) that receives a radio wave from a GPS (Global Positioning System) satellite.

The communication device main body portion 51, the antenna 52, and the antenna cable 53 constituting the communication device are placed at predetermined positions in the driving unit 10. In the present embodiment, the communication device main body portion 51, the antenna 52, and the antenna cable 53 are all provided in the cabin 20.

The communication device main body portion 51 is placed in a left end portion of the horizontal upper surface portion of the driver's seat support base 16 on which the driver's seat 17 is placed, and is located on the left side of the driver's seat 17. The communication device main body portion 51 has a flat box-like outer shape, and is fixed to the upper surface portion of the driver's seat support base 16 with a fixing member such as a bolt, and is covered with a protective plate 54 from above.

The antenna 52 is placed near a right front corner portion of the driving unit 10. The antenna 52 has a flat cylindrical outer shape, and is oriented so that the central axis (cylinder axis) direction of the outer shape of the antenna 52 corresponds to the up-down direction.

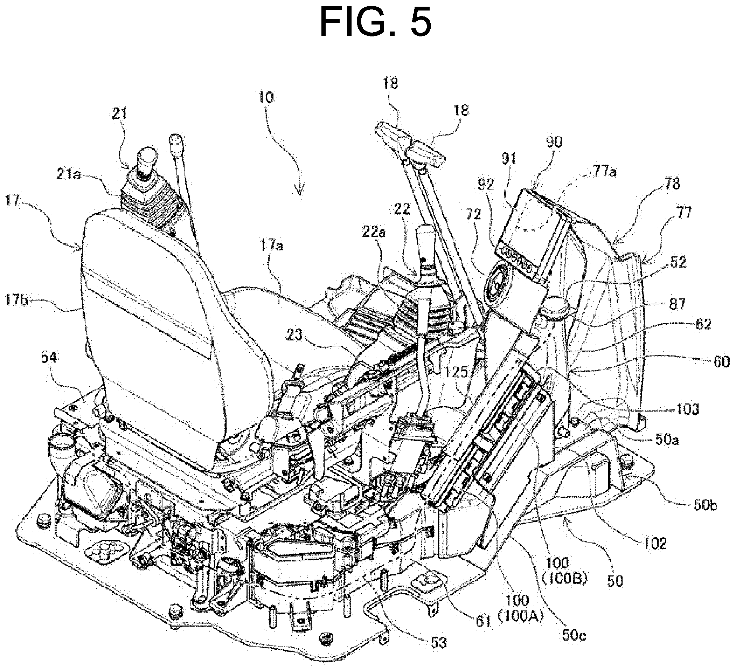

The antenna cable 53 extends downward from the antenna 52, then extends rearward along an edge portion on the right side in the cabin 20 and around the rear side of the driver's seat support base 16, and is connected to the communication device main body portion 51 located on the left side of the driver's seat 17. In FIG. 5, a wiring path of the antenna cable 53 is indicated by a double-dot-dash line.

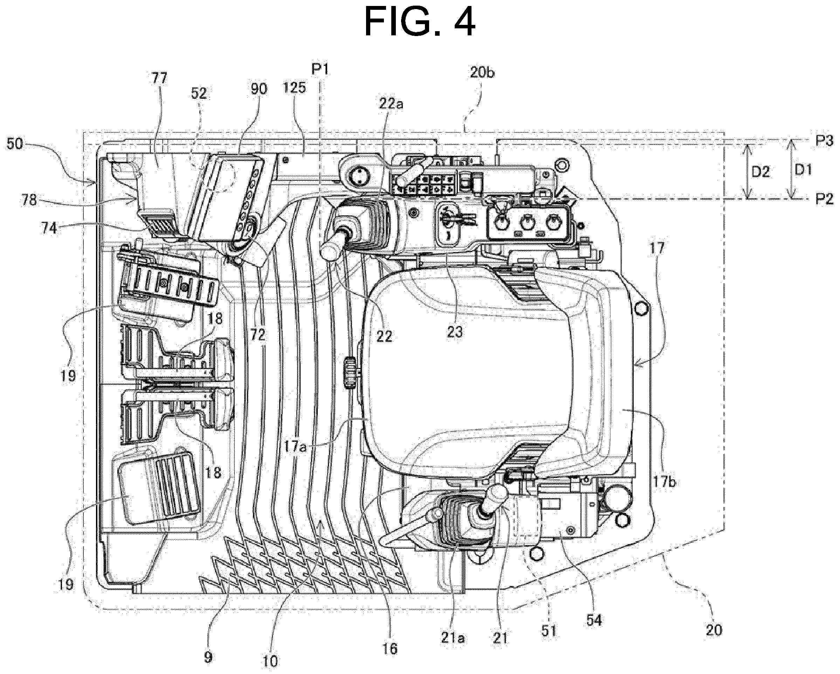

Thus, the excavation work machine 1 includes the wireless communication antenna 52 provided in the driving unit 10 having a driving base 50 as a base part. The driving base 50 is a horizontal base portion that includes the floor portion 9 and constitutes the base part of the driving unit 10, and has a substantially rectangular outer shape in plan view (see FIG. 4). The driving base 50 constitutes a bottom surface portion of the cabin 20 that covers the driving unit 10. The antenna 52 is placed at a predetermined position on the driving base 50. The arrangement configuration of the antenna 52 and the surrounding configuration will be described below with reference to FIGS. 3 to 10.

The excavation work machine 1 includes the driver's seat 17 provided on the driving base 50 via the driver's seat support base 16, and the right side work operation lever 22 as an operation lever placed on the right side of the driver's seat 17, which is one of the left and right sides of the driver's seat 17. In this configuration, the antenna 52 is placed at a position diagonally right in front of the driver's seat 17 in plan view. Specifically, the antenna 52 is placed at a position that is located in front of the right side work operation lever 22 in the front-rear direction and that is located on the outer side of the right side work operation lever 22 and on the inner side of the edge of the driving base 50 in the left-right direction.

As shown in FIG. 4, in the front-rear direction, the antenna 52 is placed so that the entire antenna 52 is located in front of a position P1 of a front end of the right side work operation lever 22. The position P1 of the front end of the right side work operation lever 22 is, for example, the position of a front end of a movable range of the lever or the position of a front end of the lever boot 22a. That is, in the front-rear direction, the antenna 52 is provided at a position in front of a region in which the right side work operation lever 22 is placed and the movable range of the right side work operation lever 22 is included. The antenna 52 may be provided so that at least part of the antenna 52 is located in front of the right side work operation lever 22 in the front-rear direction.

In the left-right direction, the antenna 52 is placed so that the entire antenna 52 is located in a range D1 between a position P2 of a right end of the right side work operation lever 22, which is an end of the right side work operation lever 22 on the outer side (right side), and a position P3 of an edge of the driving base 50 on the right side. The position P2 of the right end of the right side work operation lever 22 is, for example, the position of a right end of the movable range of the lever or the position of a right end of the lever boot 22a. That is, in the left-right direction, the antenna 52 is provided at a position on the right side of the region in which the right side work operation lever 22 is placed and the movable range of the right side work operation lever 22 is included. The antenna 52 may be provided so that at least part of the antenna 52 is located in the range D1 in the left-right direction.

The excavation work machine 1 includes the cabin 20 that covers the driving base 50 (see FIG. 1). In this configuration, in the left-right direction, the antenna 52 is placed between the right side work operation lever 22 and a right side wall portion 20b that is a side wall portion of the cabin 20 on the right side (see FIG. 4).

The right side wall portion 20b of the cabin 20 as a whole constitutes, on the right side of the cabin 20, a vertical surface portion whose thickness direction corresponds to a substantially left-right direction. In the present embodiment, the right side wall portion 20b is located at substantially the same position as a right edge portion of the driving base 50 in the left-right direction so that the right side wall portion 20b extends along the right edge portion of the driving base 50 in plan view. However, the relationship between the position of the right side wall portion 20b and the position of the right edge portion of the driving base 50 in the left-right direction is not limited, and the right side wall portion 20b may be located on the outer side (right side) or the inner side (left side) of the right edge portion of the driving base 50.

The antenna 52 placed on the right side of the right side work operation lever 22 in the left-right direction on the driving base 50 as described above, t is located on the left side of the right side wall portion 20b of the cabin 20. That is, in the left-right direction, the antenna 52 is placed so that the entire antenna 52 is located in a range D2 between the position P2 of the right end of the right side work operation lever 22 and a position P4 of a left side surface of the right side wall portion 20b.

Thus, in the configuration including the cabin 20, in the left-right direction, the antenna 52 is provided at a position that is located on the right side of the region in which the right side work operation lever 22 is placed and the movable range of the right side work operation lever 22 is included and that is located inside the cabin 20. The antenna 52 may be provided so that at least part of the antenna 52 is located in the range D2 in the left-right direction.

The antenna 52 is attached to an air conditioning duct 60 that is provided in the cabin 20 of the excavation work machine 1. The air conditioning duct 60 is provided in an air conditioning unit (not shown) of the excavation work machine 1. The air conditioning unit is a device component serving as an indoor unit of an air conditioning device for cooling and heating the inside of the cabin 20, and constitutes the air conditioning device together with a capacitor unit (not shown) as an outdoor unit.

The air conditioning unit is provided inside the hollow driver's seat support base 16, and is placed below the driver's seat 17. The air conditioning unit includes a heat exchanger that includes an evaporator, a heater core, and the like, and a blower fan that blows air to the heat exchanger. In the air conditioning unit provided inside the driver's seat support base 16, outside air is sucked from the left side of the driver's seat support base 16, and air for air conditioning is discharged from the right side of the driver's seat support base 16. A ventilation hole 16a for taking in outside air is provided on the left side surface portion of the driver's seat support base 16 (see FIG. 3).

The air conditioning duct 60 is a duct for sending air for air conditioning obtained by the air conditioning unit to the inside of the cabin 20, and is mainly composed of a resin member. As air for air conditioning, cold air generated by the evaporator of the heat exchanger, or the like, is pressurized and transported in the air conditioning duct 60 by a compressor (not shown), and is blown out from a plurality of air outlets provided for the inside of the cabin 20.

The air conditioning duct 60 communicates, on the right side, with the space for housing the air conditioning unit in the driver's seat support base 16. The air conditioning duct 60 extends forward from the right side of the driver's seat support base 16 in plan view, and extends along the inner side of the right side wall portion 20b of the cabin 20. The air conditioning duct 60 has, as portions forming a duct shape, a front-rear extending portion 61 that constitutes a rear portion of the air conditioning duct 60 and a raised portion 62 that is provided in front of the front-rear extending portion 61 and constitutes a front portion of the air conditioning duct 60.

The front-rear extending portion 61 is a duct portion that extends forward of the driver's seat 17 along the edge portion of the driving base 50 on the right side in plan view. The front-rear extending portion 61 has substantially the same height as the driver's seat support base 16 and has a substantially quadrangular prism outer shape whose longitudinal direction corresponds to the front-rear direction, and is provided along the driving base 50 on the driving base 50. A rear portion of the front-rear extending portion 61 is communicatively connected to the space for housing the air conditioning unit while the entire rear portion is joined to a lateral portion of the driver's seat support base 16 on the right side on which air is discharged from the air conditioning unit.

The raised portion 62 is a duct portion that is raised from the front-rear extending portion 61. The raised portion 62 includes an inclined portion 63 that extends obliquely upward and forward from a front end portion of the front-rear extending portion 61, and a raised main body portion 64 that is raised from the front side of the inclined portion 63 at a sharp angle with respect to the inclined portion 63.

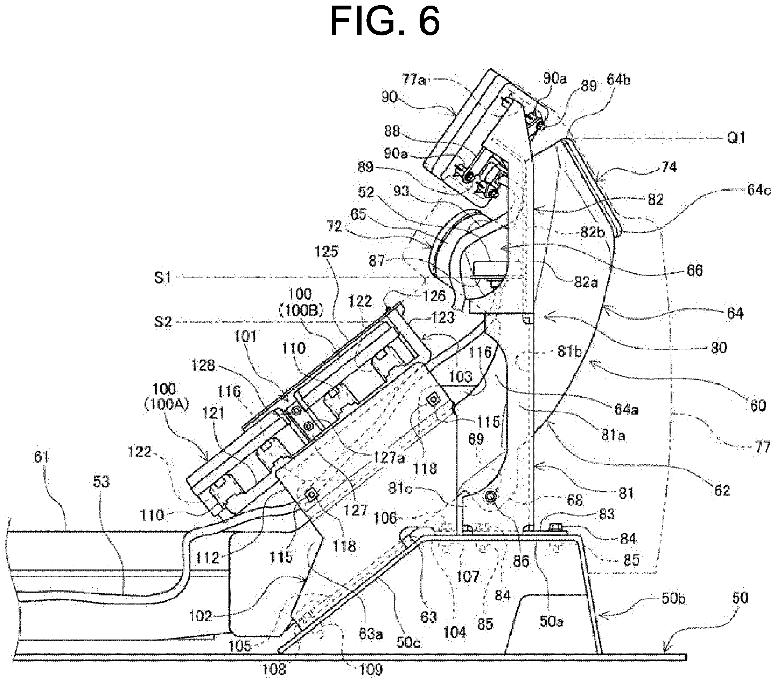

The inclined portion 63 is an inclined portion substantially linearly extending to be inclined at a predetermined angle (e.g., approximately 40°) with respect to the horizontal direction in side view. The raised main body portion 64 has a gently curved shape that is curved outward on the front side (the right side in FIG. 6) in side view, and constitutes a portion warped upward from the front side of the inclined portion 63 as a front portion of the raised portion 62. The raised portion 62 has a shape in side view in which from the rear side toward the front side, the raised portion 62 is gradually raised in an inclined manner due to the inclined portion 63 and the front portion of the raised portion 62 is relatively sharply raised due to the raised main body portion 64.

The air conditioning duct 60 has, as a plurality of air outlets, a first air outlet 71 that is provided on the lateral inner side (left side) of the front-rear extending portion 61, and a second air outlet 72, a third air outlet 73, a fourth air outlet 74 that are provided in the raised main body portion 64.

The first air outlet 71 is an air outlet for feet that is provided to be directed toward the feet of the operator sitting in the driver's seat 17. The second air outlet 72 is provided to be directed toward the upper body or head of the operator sitting in the driver's seat 17. In the raised main body portion 64 of the air conditioning duct 60, the second air outlet 72 is provided in an end surface portion of a cylindrical portion 65 that has a cylindrical outer shape extending toward the driver's seat 17 and that protrudes in a branched manner toward the lateral inner side and obliquely rearward and upward. The first air outlet 71 and the second air outlet 72 both have a circular opening. The first air outlet 71 and the second air outlet 72 are respectively provided with louvers 71a and 72a that have a circular outer shape corresponding to the opening shape of the air outlets and that are used to adjust the amount of air.

The third air outlet 73 is provided to be directed toward the lateral inner side in a vertical intermediate portion of the raised main body portion 64. The fourth air outlet 74 is located above the third air outlet 73, and is provided to be directed toward the lateral inner side and obliquely forward and upward in an upper end portion of the raised main body portion 64. The third air outlet 73 and the fourth air outlet 74 both have a rectangular opening. The third air outlet 73 and the fourth air outlet 74 are respectively provided with louvers 73a and 74a that have a rectangular outer shape corresponding to the opening shape of the air outlets and that are used to adjust the amount of air.

The air conditioning duct 60 is provided with a cover member 77 as a duct cover that mainly covers the raised portion 62 of the air conditioning duct 60. The cover member 77 is a plate-shaped resin member having a predetermined covering shape corresponding to the outer shape of the air conditioning duct 60, and covers almost the entire raised main body portion 64 of the air conditioning duct 60, except for the right side portion of the raised main body portion 64 that faces the right side wall portion 20b of the cabin 20. The cover member 77 constitutes, together with the raised portion 62 of the air conditioning duct 60, a duct raised portion 78 that is a raised portion of the duct part. The cover member 77 has opening portions corresponding to the positions of the first air outlet 71, the second air outlet 72, the third air outlet 73, and the fourth air outlet 74, and allows the air outlets to face the outside.

In the configuration described above, the antenna 52 is placed at a position that is located on the outer side of the raised portion 62 of the air conditioning duct 60 in the left-right direction and that is located below an upper end of the raised portion 62 in the up-down direction.

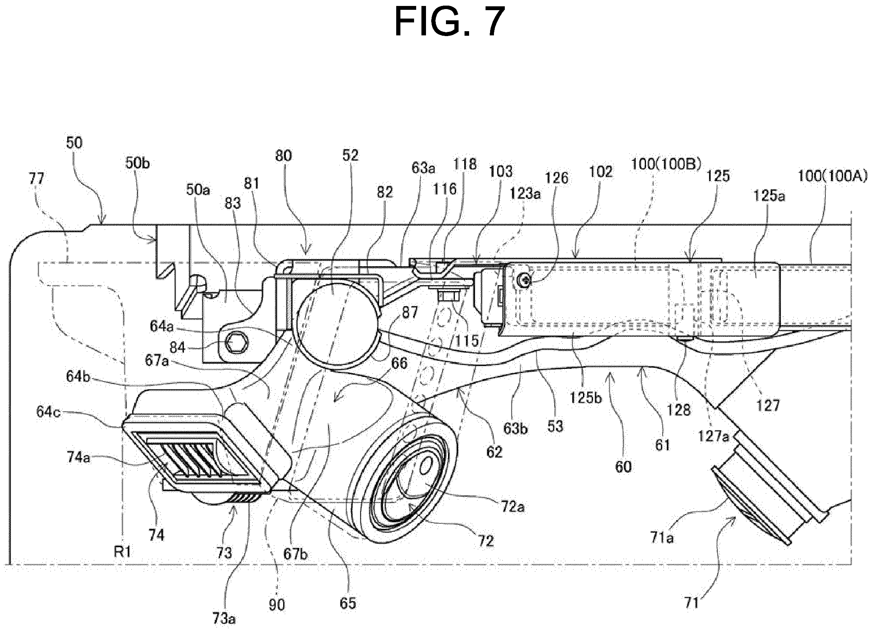

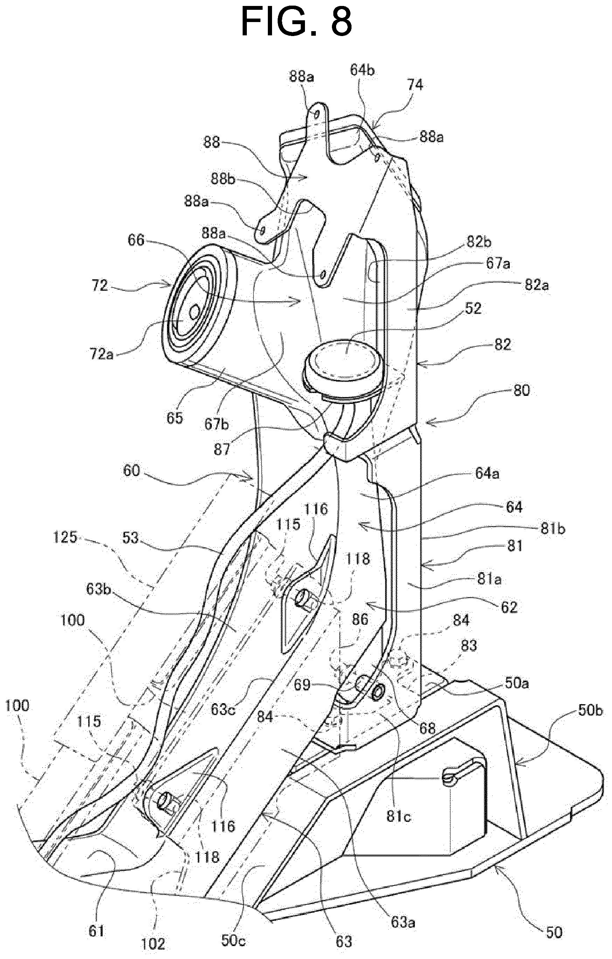

As shown in FIGS. 7 and 8, in the left-right direction, the antenna 52 is placed at a position on the lateral outer side (right side) with respect to the raised main body portion 64 constituting the front portion of the raised portion 62. The antenna 52 is placed on the right side of the raised main body portion 64 so that most part of the antenna 52 overlaps with an inclined right side surface portion 64a of the raised main body portion 64 in plan view. Thus, the antenna 52 is placed so that most part of the antenna 52 overlaps with the raised portion 62 of the air conditioning duct 60 in plan view.

The inclined right side surface portion 64a is a right side surface portion of a lower portion of the raised main body portion 64, and is a surface portion gradually inclined from the lateral outer side (right side) toward the lateral inner side (left side) from the lower side toward the upper side in front view. The inclined right side surface portion 64a is smoothly continuous to an upper side portion of a right side surface portion 63a of the inclined portion 63 of the air conditioning duct 60.

In the up-down direction, the antenna 52 is placed so that the entire antenna 52 is located below a position Q1 of an upper end of the raised main body portion 64 of the raised portion 62 (see FIG. 6). The upper end portion of the raised main body portion 64 has an upper side corner 64b of the upper end portion of the raised main body portion 64 in which the rectangular fourth air outlet 74 is provided. The antenna 52 is placed at a substantially center position with respect to the raised main body portion 64 in the up-down direction.

The antenna 52 is located on the right side of the raised main body portion 64 of the air conditioning duct 60, and the air conditioning duct 60 has a recess portion 66 that is recessed toward the lateral inner side in a portion of the raised main body portion 64 that includes the position at which the antenna 52 is placed in the up-down direction in the raised main body portion 64 of the raised portion 62. The recess portion 66 is composed of a recessed surface portion that is smoothly continuous to an upper side portion of the inclined right side surface portion 64a.

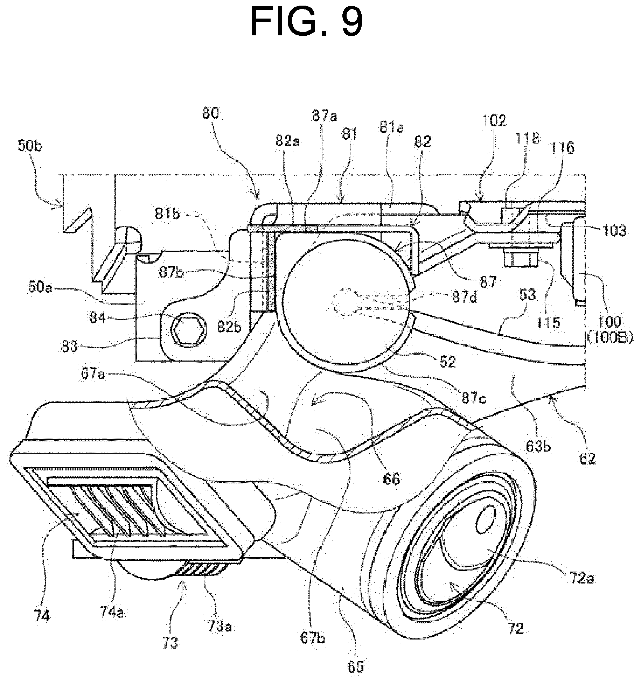

The recess portion 66 is provided to have a curved recess shape in cross-sectional plan view in a right side portion of a substantially upper half portion of the raised main body portion 64 that includes the branch portion of the cylindrical portion 65 from the raised main body portion 64 (see FIG. 9). The recessed surface portion constituting the recess portion 66 has a surface portion 67a on the rear side of the upper portion of the raised main body portion 64 and a surface portion 67b on the right side of the cylindrical portion 65, and the recessed surface portion is provided in a portion having a substantially "Y" shape following the branch shape of the raised main body portion 64 and the cylindrical portion 65 in right side view.

The antenna 52 placed on the right side of the raised main body portion 64 of the air conditioning duct 60 as described above is supported by a duct support frame 80 that is vertically provided on the driving base 50. The duct support frame 80 has a lower frame portion 81 that is composed of a lower frame member and constitutes a lower half portion of the duct support frame 80, and an upper frame portion 82 that is composed of an upper frame member and constitutes an upper half portion of the duct support frame 80. In FIG. 5, the duct support frame 80 is not shown.

The frame members constituting the lower frame portion 81 and the upper frame portion 82 are longitudinal members whose extending direction corresponds to the up-down direction, and the frame members arranged in series are fixed to each other by welding or the like to form the duct support frame 80 having an integral pillar shape. The duct support frame 80 is substantially vertically provided as a whole, and the upper end of the duct support frame 80 is located at substantially the same height as the upper end of the air conditioning duct 60.

In the duct support frame 80, the lower frame portion 81 has a right side surface portion 81a whose thickness direction corresponds to the left-right direction and a front surface portion 81b whose thickness direction corresponds to the front-rear direction, and the upper frame portion 82 has a right side surface portion 82a whose thickness direction corresponds to the left-right direction and a front surface portion 82b whose thickness direction corresponds to the front-rear direction. The right side surface portion 81a and the front surface portion 81b and the right side surface portion 82a and the front surface portion 82b are provided as portions having a substantially "L" shape in cross-sectional plan view in almost the entire duct support frame 80 in the up-down direction.

The duct support frame 80 has a fixing surface portion 83 in a lower end portion of the lower frame portion 81. The fixing surface portion 83 is a plate surface portion perpendicular (horizontal) to the extending direction of the duct support frame 80. The fixing surface portion 83 includes an inner side portion that is bent at a right angle from a lower end of the right side surface portion 81a of the lower frame portion 81 toward the lateral inner side (left side), and an outer side portion that protrudes from the lower side toward the front side of the front surface portion 81b.

The duct support frame 80 is fastened and fixed at two positions with fixing bolts 84 to a horizontal support surface portion 50a provided in a right front portion of the driving base 50 (see FIG. 6). Each of the fixing bolts 84 passes through the fixing surface portion 83 and the support surface portion 50a, and is screwed into a nut 85. The support surface portion 50a of the driving base 50 is a protruding portion with respect to most of the other portion of the driving base 50, and is provided as an upper surface portion of a support base portion 50b having a substantially trapezoidal shape in right side view.

The duct support frame 80 has, in the lower end portion of the lower frame portion 81, a wide width portion 81c whose width (dimension in the front-rear direction) is increased toward the rear side relative to the other portion of the lower frame portion 81 on the upper side. The air conditioning duct 60 is fixed to the duct support frame 80 with a fixing bolt 86 at the wide width portion 81c.

The fixing bolt 86 passes through a support protruding piece portion 68 of the air conditioning duct 60 from the left side and is screwed into a cylindrical boss portion 69 protrusively provided on the inner side (left side) of the wide width portion 81c so that the air conditioning duct 60 is fastened and fixed to the duct support frame 80 (see FIG. 8). The support protruding piece portion 68 is a portion of the air conditioning duct 60 at which the air conditioning duct 60 is fixed to the duct support frame 80, and the support protruding piece portion 68 is provided below a front end portion of the inclined portion 63 to protrude downward as a plate-shaped protruding piece portion whose thickness direction corresponds to a substantially left-right direction.

In the duct support frame 80 that is vertically provided on the driving base 50 and fixed to the air conditioning duct 60 and is used to support the air conditioning duct 60 as described above, an antenna support plate 87 that supports the antenna 52 is provided in a lower portion of the upper frame portion 82. The antenna support plate 87 is a horizontal plate portion, and is provided on the inner side of the substantially "L" shaped cross section constituted by the right side surface portion 82a and the front surface portion 82b of the upper frame portion 82.

The antenna support plate 87 is formed by fixing a plate member having a predetermined shape to the right side surface portion 82a and the front surface portion 82b by welding or the like. The antenna support plate 87 has, as edge portions forming the outer shape of the antenna support plate 87 in plan view, a right side portion 87a that linearly extends in the front-rear direction along the inner side of the right side surface portion 82a, a front side portion 87b that linearly extends in the left-right direction along the inner side of the front surface portion 82b, and an arc portion 87c that extends along an arc shape. The outer shape in plan view of the antenna support plate 87 composed of the right side portion 87a, the front side portion 87b, and the arc portion 87c is an irregular circular shape (substantially droplet shape) having a right-angled corner on the right front side (see FIG. 9). The dimension of the outer shape of the antenna support plate 87 is larger than that of the outer shape of the antenna 52 having a circular outer shape in plan view.

The antenna 52 is placed on the antenna support plate 87 and is fixed to the antenna support plate 87 with a fixing member such as a screw or the like. The antenna support plate 87 has a through opening portion 87d for avoiding interference with the antenna cable 53 extending from a lower surface portion of the antenna 52 (see FIG. 9). The opening portion 87d is a portion linearly cut out rearward from a central portion of the antenna support plate 87.

The duct support frame 80 supports a monitor 90 that is provided in the driving unit 10 in the cabin 20 of the excavation work machine 1. The monitor 90 is a display device that displays, for example, various situations and states of the excavation work machine 1 to the operator or the like. The monitor 90 has a substantially rectangular plate-like outer shape, and has a rectangular display screen 91, and a plurality of operation buttons 92 that are placed below the display screen. The monitor 90 is, for example, a liquid crystal monitor having a touch panel function, and is connected to the control unit (not shown) of the excavation work machine 1 by a monitor cable 93 that extends from the back side (see FIG. 6). The control unit controls the content displayed on the monitor 90. In FIG. 8, the monitor 90 is not shown.

The monitor 90 is placed in front of the right side work operation lever 22, and is fixed to a monitor support plate portion 88 that is provided in an upper end portion of the duct support frame 80. The monitor support plate portion 88 is a bent portion provided in an upper end of the upper frame member constituting the upper frame portion 82. The monitor support plate portion 88 is bent from the upper end of the right side surface portion 82a of the upper frame portion 82 toward the lateral inner side. The monitor support plate portion 88 has a substantially "H" shaped plate shape composed of left and right side portions forming four corners of the monitor support plate portion 88 and an intermediate portion connecting the side portions (see FIG. 8). An upper portion of the right side portion is connected to the upper end portion of the right side surface portion 82a.

The monitor support plate portion 88 is provided so that a plate surface of the monitor support plate portion 88 is parallel to the display screen 91 of the monitor 90 according to the orientation of the display screen 91 of the monitor 90. The monitor 90 is supported by and fixed to the rear side of the monitor support plate portion 88, and is supported by the monitor support plate portion 88 from the back side of the monitor 90. The monitor 90 is located diagonally right in front of the driver's seat 17, and is placed so that the display screen 91 is oriented obliquely leftward and upward to allow the display screen 91 to be oriented toward the operator sitting in the driver's seat 17. The monitor support plate portion 88 is provided in an inclined manner according to the orientation of the monitor 90.

The monitor 90 is fixed to the monitor support plate portion 88 with fixing members 89 such as bolts at four corners of the substantially rectangular plate-like outer shape of the monitor 90 (see FIG. 6). Each of the fixing members 89 passes through the monitor support plate portion 88, and is screwed into a boss portion 90a that protrudes toward the back side of a case portion of the monitor 90. Hole portions 88a through which the fixing members 89 pass are provided at the four corners of the monitor support plate portion 88 (see FIG. 8). In the monitor support plate portion 88, a recess portion 88b on the lower side of the substantially "H" shaped outer shape is used to avoid interference with the monitor cable 93.

The monitor 90 supported at the upper end portion of the duct support frame 80 as described above is placed in the upper portion of the raised main body portion 64 of the raised portion 62 in a relationship with the air conditioning duct 60. Specifically, in the left-right direction, the monitor 90 is placed near the right side of the raised main body portion 64 so that a part of the monitor 90 overlaps with the portion of the raised main body portion 64 in which the fourth air outlet 74 is provided together with the corner 64b of the upper end portion of the raised main body portion 64. Furthermore, in the left-right direction, the monitor 90 is placed so that a substantially half of the monitor 90 on the left side overlaps with the cylindrical portion 65 provided in the upper portion of the raised main body portion 64.

Furthermore, in the front-rear direction, the monitor 90 is provided so that the entire monitor 90 is located behind a position R1 of a front end of the air conditioning duct 60 (see FIG. 7). The position R1 of the front end of the air conditioning duct 60 is the position of a front end of an upper front corner 64c of the portion of the raised main body portion 64 in which the fourth air outlet 74 is provided.

In a relationship with the monitor 90, the antenna 52 is placed below the monitor 90 so that at least part of the antenna 52 overlaps with the monitor 90 in plan view. In the present embodiment, the antenna 52 is supported at the lower portion of the upper frame portion 82 and provided in a vertical intermediate portion of the duct support frame 80, and the monitor 90 is supported at the upper end portion of the duct support frame 80. Thus, the antenna 52 is located below the monitor 90.

The antenna 52 is placed so that almost the entire antenna 52 overlaps with the monitor 90 in plan view. Specifically, as shown in FIG. 7, almost the entire antenna 52 placed below the monitor 90 is located in the outer shape range of the monitor 90 in plan view, except for a front end portion of the circular outer shape of the antenna 52 in plan view. In other words, in a relationship with the monitor 90, the antenna 52 is placed so that the front end portion of the circular outer shape of the antenna 52 protrudes forward from the monitor 90 in plan view.

The duct support frame 80 that supports the antenna 52 and the monitor 90 as described above is placed so that the entire duct support frame 80 is located inside the space between the cover member 77 and the right side wall portion 20b of the cabin 20 and is hidden from the outside together with the air conditioning duct 60. The cover member 77 has a cutout portion 77a that extends along the substantially rectangular outer shape of the monitor 90 and is opened on the right side (see FIG. 5), and the monitor 90 is fitted in the cutout portion 77a so that the monitor 90 faces the outside.

The air conditioning duct 60 supports relay boxes 100, which are examples of electrical components of the excavation work machine 1. The relay boxes 100 have a substantially rectangular parallelepiped outer shape. The relay boxes 100 are each a case that houses a plurality of relays constituting an electrical system for electrical components (e.g., an electromagnetic control valve, various sensors such as a hydraulic oil temperature sensor, an engine starter motor, etc.) of the excavation work machine 1. Electrical wires (not shown) are connected to the relays in the relay boxes 100.

The excavation work machine 1 includes, as the relay boxes 100, two relay boxes 100A and 100B that have substantially the same outer shape and dimension. The two relay boxes 100 are placed above the inclined portion 63 of the air conditioning duct 60. The two relay boxes 100 are arranged in series with a gap 101 therebetween so that the longitudinal direction of the two relay boxes 100 corresponds to the front-rear direction in plan view and extends along the inclined portion of the inclined portion 63. The two relay boxes 100 are supported by the air conditioning duct 60 via a support plate 102 and a support frame 103.

The support plate 102 is provided on the right side of the inclined portion 63 of the air conditioning duct 60 so that the thickness direction of the support plate 102 corresponds to a substantially left-right direction, and covers a longitudinal intermediate portion of the right side surface portion 63a of the inclined portion 63 from the right side. The support plate 102 is fixed to and supported by the support base portion 50b of the driving base 50 and fixed to the inclined portion 63 of the air conditioning duct 60 to support the air conditioning duct 60 with respect to the support base portion 50b of the driving base 50.

A lower end portion of the support plate 102 has a shape extending along the support surface portion 50a of the driving base 50 and an inclined surface portion 50c that is provided on the rear side of the support surface portion 50a and inclined downward toward the rear. The inclined surface portion 50c is inclined in the same manner or substantially the same manner as the inclined portion 63 of the air conditioning duct 60 in side view. That is, the inclined surface portion 50c is provided parallel to the inclined portion 63 in side view.

The support plate 102 has a fixing surface portion 104 for the support surface portion 50a in a front portion of the lower end portion, and has a fixing surface portion 105 for the inclined surface portion 50c in a rear portion of the lower end portion (see FIG. 6). The fixing surface portions 104 and 105 are provided as surface portions bent at a right angle toward the lateral inner side (left side) for a main body portion of the support plate 102.

The support plate 102 is placed so that the fixing surface portion 104 overlaps from above with a rear portion of the support surface portion 50a and that the fixing surface portion 104 is fastened and fixed to the support surface portion 50a with a fixing bolt 106. The fixing bolt 106 passes through the fixing surface portion 104 and the support surface portion 50a, and is screwed into a nut 107. Furthermore, the support plate 102 is placed so that the fixing surface portion 105 overlaps from above with the inclined surface portion 50c and that the fixing surface portion 105 is fastened and fixed to the inclined surface portion 50c with a fixing bolt 108. The fixing bolt 108 passes through the fixing surface portion 105 and the inclined surface portion 50c, and is screwed into a nut 109.

An upper portion of the support plate 102 has a support surface portion 112 that extends upward from the inclined portion 63 of the air conditioning duct 60 in side view. The support surface portion 112 is a portion of the support plate 102 that protrudes upward from an inclined upper surface portion 63b of the inclined portion 63, and is a rectangular portion whose longitudinal direction corresponds to the direction extending along the inclined portion of the inclined portion 63. In the inclined portion 63, the inclined upper surface portion 63b forms, together with the right side surface portion 63a, a linear ridge portion 63c that extends along the inclined portion of the inclined portion 63.

The air conditioning duct 60 is fixed to the support plate 102 with fixing bolts 115 at the support surface portion 112. Each of the fixing bolts 115 passes through a support protruding piece portion 116 of the air conditioning duct 60 from the left side and is screwed into a nut portion 118 provided on the right side of the support surface portion 112 so that the air conditioning duct 60 is fastened and fixed to the support surface portion 112. The support protruding piece portions 116 are portions of the air conditioning duct 60 at which the air conditioning duct 60 is fixed to the support plate 102, and the support protruding piece portions 116 are provided to protrude upward as plate-shaped protruding piece portions whose thickness direction corresponds to a substantially left-right direction. In an edge portion of the inclined upper surface portion 63b on the right side, the support protruding piece portions 116 are provided along the ridge portion 63c at two positions in front and rear portions of the inclined portion 63. That is, the support plate 102 is fixed to the air conditioning duct 60 with the fixing bolts 115 and the like at two positions in the front and rear.

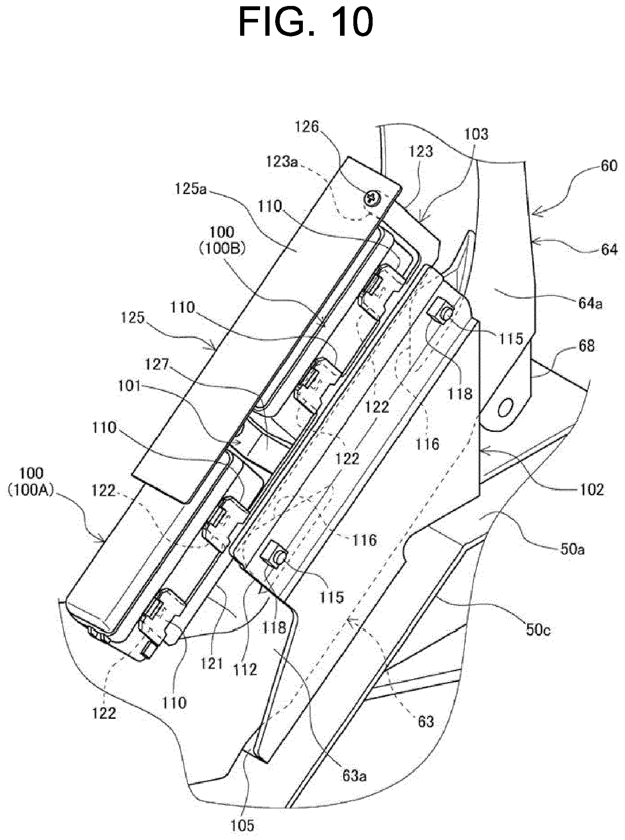

The support frame 103 is a plate member having a predetermined shape, and has a linear base part 121 having a predetermined width, a plurality of engagement protruding piece portions 122 that protrude upward from the base part 121 in a direction perpendicular to the extending direction of the base part 121, and a support arm portion 123 that extends from a front end portion of the base part 121 in the same direction as the engagement protruding piece portions 122 (see FIG. 10). The support frame 103 has a substantially comb shape composed of the base part 121, the plurality of engagement protruding piece portions 122, and the support arm portion 123. In the support frame 103, the base part 121 extends along an upper edge portion of the support surface portion 112 of the support plate 102, and most part of the base part 121 is fixed to the inner side (left side) of the support surface portion 112 by welding or the like.

In the support frame 103, the plurality of engagement protruding piece portions 122 are inserted into engaged portions 110 that are provided in a right side surface portion of each of the relay boxes 100 and engaged with the relay boxes 100 to support the relay boxes 100 with respect to the support plate 102. The engaged portions 110 have an insertion hole portion into which each of the engagement protruding piece portions 122 having a rectangular plate shape is inserted. Each of the relay boxes 100 has the engaged portions 110 at two positions in the front and rear, and is supported by the engagement protruding piece portions 122 at the two positions in the front and rear.

For the two relay boxes 100, a protection plate 125 that partially covers the relay boxes 100 from the upper side and the left side is provided. The protection plate 125 covers the entire upper surface portion and most part of the left side surface portion of the front side relay box 100B, and covers a part on the front side of each of the upper surface portion and the left side surface portion of the rear side relay box 100A.

An upper surface portion 125a of the protection plate 125 is fastened and fixed with a bolt 126 and a nut (not shown) to a bent surface portion 123a that is bent leftward from an upper end portion of the support arm portion 123 of the support frame 103. Furthermore, a left side surface portion 125b of the protection plate 125 is fastened and fixed at two upper and lower positions with bolts 128 to a support stay 127 that is provided in the gap 101 between the front and rear relay boxes 100. Each of the bolts 128 is screwed into a cylindrical boss portion 127a of the support stay 127.

The excavation work machine 1 including the two relay boxes 100 as described above has the following arrangement configuration in a relationship with the antenna 52 and the relay boxes 100. That is, the relay boxes 100 are provided at a position below the antenna 52 in the up-down direction, and are supported by the air conditioning duct 60.

As shown in FIG. 6, the two relay boxes 100 arranged in series in an inclined manner in side view are both located below a height position S1 of the antenna support plate 87 by which the antenna 52 placed on the antenna support plate 87 is supported. That is, a height position S2 of the upper end of the front side relay box 100B located on the upper side is located below the height position S1 of the antenna support plate 87, and the two relay boxes 100 are placed so that each of the entire relay boxes 100 is located below the antenna 52.

The air conditioning duct 60 has, as a portion that supports the two relay boxes 100, the inclined portion 63 inclined upward toward the front in side view. The inclined portion 63 fixes the support plate 102 to the support protruding piece portions 116 located at two positions in the front and rear, and fixes and supports, via the support plate 102 and the support frame 103, the two relay boxes 100 arranged in series along the inclined portion of the inclined portion 63. Thus, the two relay boxes 100 are arranged and supported in series above the inclined upper surface portion 63b of the inclined portion 63 to have the same inclination angle (e.g., approximately 40°) as the inclined portion 63 with respect to the horizontal direction in side view.

In the present embodiment, the relay boxes 100 are described as examples of the electrical components supported by the air conditioning duct 60; however, the electrical components supported by the air conditioning duct 60 may be any of the electrical components of the excavation work machine 1. The electrical components of the excavation work machine 1 may be, for example, various electrical and electronic devices such as a battery, a controller, and a converter.

The arrangement configuration of the antenna 52 in the excavation work machine 1 according to the present embodiment described above enables the antenna 52 to be placed at a position apart from the driver's seat 17, while effectively utilizing the limited space of the driving unit 10.

In the driving unit 10, the antenna 52 is placed at a position that is located in front of the right side work operation lever 22 and that is located on the outer side (right side) of the right side work operation lever 22 and on the inner side of the edge of the driving base 50. This configuration enables the antenna 52 as a device that transmits and receives a relatively strong radio wave to be placed at a position apart from the operator sitting in the driver's seat 17, thus reducing the influence of the radio wave transmitted and received by the antenna 52 on the operator body.

The antenna 52 is placed between the right side work operation lever 22 and the right side wall portion 20b of the cabin 20. This configuration enables the antenna 52 to be placed at a position apart from the driver's seat 17, while effectively utilizing the limited space in the cabin 20. In particular, in the present embodiment, the antenna 52 is adjacently placed at a position close to the inner wall surface of the right side wall portion 20b of the cabin 20. Furthermore, the antenna 52 has a portion that directly faces the right side wall portion 20b of the cabin 20, that is, a portion at which no object is interposed between the right side wall portion 20b and the antenna 52. This configuration enables the antenna 52 to be placed at a position apart from the driver's seat 17, while effectively utilizing the limited space in the cabin 20.

The antenna 52 is placed below the monitor 90 placed in front of the right side work operation lever 22. This configuration enables the antenna 52 to be placed at a position apart from the driver's seat 17, while effectively utilizing the space below the monitor 90.

The antenna 52 is placed at a position that is located on the outer side (right side) of the raised portion 62 and that is located below the upper end of the raised portion 62 of the air conditioning duct 60 provided in the driving unit 10. This configuration enables the antenna 52 to be placed at a position apart from the driver's seat 17, while effectively utilizing the space on the lateral outer side of the air conditioning duct 60. Furthermore, the air conditioning duct 60 serving as a shielding portion for the driver's seat 17 can reduce the influence of the radio wave transmitted and received by the antenna 52 on the operator body.

The monitor 90 is placed in the upper portion of the duct raised portion 78 including the air conditioning duct 60 and the cover member 77, and the antenna 52 is placed so that at least part of the antenna 52 overlaps with the monitor 90 in plan view. This configuration enables the antenna 52 to be placed at a position apart from the driver's seat 17, while effectively utilizing the space that is located on the lateral outer side of the air conditioning duct 60 and located around the monitor 90.

The antenna 52 and the monitor 90 can be placed close to each other, and thus these electrical components can have good maintainability and assemblability. Specifically, for example, the removal of the cover member 77 enables easy access to the antenna 52 and the monitor 90, thus allowing efficient maintenance work for these electrical components.

In the configuration in which the antenna 52 is placed on the lateral outer side of the raised portion 62 of the air conditioning duct 60, the air conditioning duct 60 has, on the side of the raised portion 62 on which the antenna 52 is placed, the recess portion 66 recessed toward the lateral inner side (left side). This configuration enables the space on the lateral outer side of the raised portion 62 to be efficiently used as a space for placing the antenna 52, a space for maintenance of the antenna 52, a space for attaching or detaching the antenna 52, or the like.

The excavation work machine 1 includes the duct support frame 80 that supports the air conditioning duct 60 with respect to the driving base 50, and the antenna 52 is supported by the duct support frame 80. This configuration enables the component for supporting the air conditioning duct 60 to also serve to support the antenna 52, achieving simplification of the component for supporting the antenna 52, thus making it possible to effectively utilize the space on the lateral outer side of the air conditioning duct 60. Furthermore, the duct support frame 80 is a strong frame component that supports the air conditioning duct 60 as a relatively large-sized device component, and thus can firmly support the antenna 52.

The two relay boxes 100 placed below the antenna 52 are supported by the air conditioning duct 60 via the support plate 102 and the support frame 103. This configuration enables the antenna 52 and the relay boxes 100 to be placed close to each other, achieving collective arrangement of these electrical components in an easily accessible position, thus allowing these electrical components to have good maintainability and assemblability. Furthermore, the configuration makes it possible to effectively utilize the space around the air conditioning duct 60 as a space for placing the relay boxes 100.

The air conditioning duct 60 has, as a portion that supports the relay boxes 100, the inclined portion 63 inclined upward toward the front in side view. This configuration enables the space above the inclined portion 63 of the air conditioning duct 60 provided in the driving unit 10 to be used as a space for placing the relay boxes 100, thus making it possible to efficiently use the space of the driving unit 10. The air conditioning duct 60 may support a single relay box 100, or may support three or more relay boxes 100.

The construction machine according to the present invention described above in the embodiment is not limited to the above-described embodiment, and various modes can be adopted to the extent within the scope of the gist of the present invention.

In the above-described embodiment, the excavation work machine 1 has a cabin-type configuration including the cabin 20 that covers the driving unit 10; however, the construction machine according to the present invention is not limited to the cabin-type configuration, and may have, for example, a canopy-type configuration including a canopy in which a roof portion is supported by a plurality of pillars or the like, or a configuration in which neither a cabin nor a canopy is included and a driving unit is exposed.

In the above-described embodiment, the antenna 52 is placed at the end of the driving unit 10 on the right side; however, the antenna 52 may be placed at the end of the driving unit 10 on the left side. In such a case, in a relationship with the left side work operation lever 21 placed on the left side of the driver's seat 17, the antenna 52 is placed at a position that is located in front of the left side work operation lever 21 in the front-rear direction and that is located on the outer side (left side) of the left side work operation lever 21 and on the inner side of the edge of the driving base 50 in the left-right direction.

The present technique may have the following configurations. The configurations described below can be selected and combined as appropriate.
(1) A construction machine including a wireless communication antenna that is provided in a driving unit having a driving base as a base part, the construction machine including:
   a driver's seat that is provided on the driving base; and
   an operation lever that is placed on one of left and right sides of the driver's seat, wherein
   the antenna is placed at a position that is located in front of the operation lever in a front-rear direction and that is located on an outer side of the operation lever and on an inner side of an edge of the driving base in a left-right direction.
(2) The construction machine according to (1), wherein
   the antenna is placed below a monitor placed in front of the operation lever.
(3) The construction machine according to (1) or (2), including an air conditioning duct having a front-rear extending portion that extends forward of the driver's seat along an edge portion of the driving base on the one of the left and right sides in plan view and a raised portion that is raised from the front-rear extending portion, wherein the antenna is placed at a position that is located on an outer side of the raised portion in the left-right direction and that is located below an upper end of the raised portion in an up-down direction.
(4) The construction machine according to (3), wherein
   the monitor is placed in an upper portion of the raised portion of the air conditioning duct, and
   the antenna is placed so that at least part of the antenna overlaps with the monitor in plan view.
(5) The construction machine according to (3) or (4), wherein
   the air conditioning duct has a recess portion that is recessed toward a lateral inner side in a portion of the raised portion that includes a position at which the antenna is placed in the up-down direction.
(6) The construction machine according to any one of (3) to (5), including a duct support frame that supports the air conditioning duct with respect to the driving base, wherein
   the antenna is supported by the duct support frame.
(7) The construction machine according to any one of (3) to (6), including an electrical component that is provided at a position below the antenna in the up-down direction and is supported by the air conditioning duct.
(8) The construction machine according to (7), wherein
   the air conditioning duct has, as a portion that supports the electrical component, an inclined portion that is inclined upward toward a front in side view.

### REFERENCE SIGNS LIST

1 Excavation work machine (construction machine)
10 Driving unit
17 Driver's seat
20 Cabin
20b Right side wall portion (side wall portion)
22 Right side work operation lever (operation lever)
50 Driving base
52 Antenna
60 Air conditioning duct
61 Front-rear extending portion
62 Raised portion
63 Inclined portion
64 Raised main body portion
66 Recess portion
80 Duct support frame
90 Monitor
100 Relay box (electrical component)

## Claims

1. A construction machine including a wireless communication antenna that is provided in a driving unit having a driving base as a base part, the construction machine comprising:
a driver's seat that is provided on the driving base; and
an operation lever that is placed on one of left and right sides of the driver's seat, wherein
the antenna is placed at a position that is located in front of the operation lever in a front-rear direction and that is located on an outer side of the operation lever and on an inner side of an edge of the driving base in a left-right direction.

2. The construction machine according to claim 1, wherein
the antenna is placed below a monitor placed in front of the operation lever.

3. The construction machine according to claim 1 or 2, comprising an air conditioning duct having a front-rear extending portion that extends forward of the driver's seat along an edge portion of the driving base on the one of the left and right sides in plan view and a raised portion that is raised from the front-rear extending portion, wherein
the antenna is placed at a position that is located on an outer side of the raised portion in the left-right direction and that is located below an upper end of the raised portion in an up-down direction.

4. The construction machine according to claim 3, wherein
the monitor is placed in an upper portion of the raised portion of the air conditioning duct, and
the antenna is placed so that at least part of the antenna overlaps with the monitor in plan view.

5. The construction machine according to claim 3, wherein
the air conditioning duct has a recess portion that is recessed toward a lateral inner side in a portion of the raised portion that includes a position at which the antenna is placed in the up-down direction.

6. The construction machine according to claim 3, comprising a duct support frame that supports the air conditioning duct with respect to the driving base, wherein
the antenna is supported by the duct support frame.

7. The construction machine according to claim 3, comprising an electrical component that is provided at a position below the antenna in the up-down direction and is supported by the air conditioning duct.

8. The construction machine according to claim 7, wherein
the air conditioning duct has, as a portion that supports the electrical component, an inclined portion that is inclined upward toward a front in side view.
